# EUROPÄISCHE PATENTANMELDUNG

(11) **EP 2 930 699 A1**
(43) Veröffentlichungstag der Anmeldung: **14.10.2015**
(21) Anmeldenummer: 15158956.1
(22) Anmeldetag: 13.03.2015
(51) Int. Cl.: G07D 7/00, G07D 7/12, G07D 7/20, G06K 19/08, B42D 25/29

(54) **SICHERHEITSMERKMAL MIT EINEM MARKIERUNGS- UND EINEM CODEABSCHNITT**

(30) Priorität: 18.03.2014 AT 501922014
(71) Anmelder: Binder Consulting GmbH, 2500 Baden (AT)
(72) Erfinder: BINDER, Walter, 2500 Baden (AT); JUNG, Folker, 86637 Wertingen (DE); NEULINGER, Thomas, 1210 Wien (AT)
(74) Vertreter: Burger, Hannes

(57) **Zusammenfassung**

Die Erfindung betrifft ein Sicherheitsmerkmal (1) umfassend einen Markierungsabschnitt (2) und einen Codeabschnitt (3), wobei der Markierungsabschnitt (2) stochastisch verteilte Markierungspartikel (4) aufweist, und wobei der Codeabschnitt (3) einen kontaktlos lesbaren Codeelement (5) mit einem , deterministischen Code aufweist, und wobei ferner ein aus dem Markierungsabschnitt (2) gebildetes Kennzeichnungs-merkmal (7) im Codeelement (5) hinterlegt ist. Die Erfindung betrifft ferner ein Druckmedium (8) mit einem Sicherheitsmerkmal, ein Sicherungs- und ein Validierungsverfahren für ein Druckmedium.

## Beschreibung

Die Erfindung betrifft ein Sicherheitsmerkmal.

Aufgrund der zunehmend besseren technischen Möglichkeiten, Medien, insbesondere Dokumente, Schriftstücke, Ausweisdokumente etc. zu manipulieren bzw. zu fälschen, kommt der Sicherung derartiger Medien eine immer größere Bedeutung zu. Insbesondere ist es Ziel derartiger Sicherungsmaßnahmen, den Aufwand für einen potentiellen Fälscher stark zu steigern, um somit den Anreiz für die Fälschung zu minimieren. Eine mögliche Sicherungsmethode zielt nun darauf ab, den Inhalt, das Aussehen sowie die Form eines zu sichernden Mediums gegen Manipulation zu schützen. Aus dem Bereich der Schriftstücke ist dazu beispielsweise bekannt, aus dem textuellen Inhalt des Dokuments bzw. aus dem Abbild des Dokuments eine Prüfsumme zu bilden und diese im Dokument zu hinterlegen und/oder sichtbar am Dokument anzubringen. Die Prüfsumme ist bevorzugt derart ausgebildet, dass aus dieser nicht auf den Inhalt des ursprünglichen Dokuments zurückgeschlossen werden kann. Bei der Überprüfung eines derart gesicherten Dokuments wird aus dem Inhalt bzw. dem Abbild des Dokuments die Prüfsumme erneut gebildet, und mit der hinterlegten bzw. aufgebrachten Prüfsumme verglichen. Bei Übereinstimmung wird davon ausgegangen, dass das geprüfte Medium dem ursprünglichen, bei der Sicherung vorgelegten Medium entspricht.

Eine weitere Sicherungsmöglichkeit besteht darin, das Druckmedium selbst zu sichern, in dem dieses nur bei einer streng limitierten Anzahl von Anbietern verfügbar ist. Beispiele dafür sind das Papier für den Banknotendruck bzw. Papier für den Fahrkarten- bzw. Eintrittskartendruck. Damit soll verhindert werden, dass ein potentieller Fälscher Zugang zu dem zu manipulierenden Medium hat. Eine dahingehend ähnliche Sicherungsmethode beruht darauf, dass Merkmale auf einem Medium aufgebracht werden, welche Merkmale nur von einem streng limitierten Anbieterkreis bereitgestellt werden. Beispiele dafür sind Hologramme wie sie auf Banknoten und Bankkarten angeordnet sind. Die hier aufgeführten Beispiele sind jedenfalls nicht abschließend zu sehen.

Verfahren welche eine Limitierung des Mediums betreffen, führen somit zu einer Monopolisierung der/des diese Medien bereitstellenden Unternehmen, wobei dies insbesondere im Bereich des Banknotendrucks durchaus gewünscht ist und zumeist in Hand staatlicher Stellen liegt.

Von Nachteil derartiger Mediensicherungsmethoden ist insbesondere, dass die jeweilige Einzelmaßnahme für eine große Anzahl von Medien angewendet wird. Gelingt es nun einem Fälscher ein derartiges Sicherheitselement zu manipulieren bzw. in Besitz eines solchen zu gelangen, kann dieser eine große Anzahl von zu sichernden Medien generieren.

Eine individuelle Sicherung jedes einzelnen Mediums ist mit den bekannten Methoden nur mit extrem großem Aufwand möglich. Im Bereich der Banknoten wird auf jede Banknote eine fortlaufende Seriennummer aufgedruckt, wobei es für einen Fälscher einfacher ist, eine gültige Seriennummer zu generieren. Insbesondere ist es einem Anwender, der die Echtheit bzw. Authentizität des gesicherten Mediums prüfen soll, bei den bekannten Methoden zumeist nur mit größerem technischen Aufwand möglich, diese zu bestätigen.

Die Aufgabe der Erfindung liegt also darin ein Sicherheitsmerkmal zu schaffen, welches einen Manipulationsversuch stark erschwert bzw. verunmöglicht. Ferner ist es Aufgabe der Erfindung ein gesichertes Medium herzustellen und die Authentizität eines gesicherten Mediums zu prüfen. Die Erfindung betrifft ferner ein entsprechend gesichertes Druckmedium.

Die Aufgabe der Erfindung wird gelöst durch ein Sicherheitsmerkmal umfassend einen Markierungsabschnitt und einen Codeabschnitt, wobei der Markierungsabschnitt stochastisch verteilte Markierungspartikel aufweist, und wobei der Codeabschnitt ein kontaktlos lesbares Codeelement mit einem deterministischen Code aufweist, wobei ferner ein aus dem Markierungsabschnitt gebildetes Kennzeichnungsmerkmal im Codeelement hinterlegt ist.

Insbesondere durch die Verwendung eines Markierungsabschnitts mit stochastisch verteilten Markierungspartikeln und Hinterlegung eines darauf basierenden Kennzeichnungsmerkmals im Codeabschnitt, kommt eine Zufallskomponente in das Sicherheitsmerkmal, welche für einen potentiellen Angreifer nur sehr schwierig zu manipulieren ist. Eine stochastische Verteilung ist hinsichtlich ihrer Detailausprägung absolut unvorhersehbar, wodurch auch die Detailausprägung des einzelnen Sicherheitsmerkmals nicht vorhersehbar wird. Bevorzugt wird das Kennzeichnungsmerkmal mit dem deterministischen Code verknüpft bzw. in diesen integriert.

Eine Weiterbildung besteht ferner darin, dass die stochastische Verteilung einer pseudostochastischen Bildungsregel genügt. Gegenüber einer stochastischen Verteilung hat eine pseudostochastische Verteilung den Vorteil, dass sich eine spezifische Detailausbildung gezielt erzeugen lässt, ohne die Gesamtheit eines Zufallsprozesses zu verlieren. Ein pseudostochastischer Prozess ist insbesondere dadurch gekennzeichnet, dass für einen Betrachter der Ergebnisraum einer pseudostochastischen, von einer stochastischen Bildungsregel nicht zu unterscheiden ist.

Eine Weiterbildung besteht darin, dass die Markierungspartikel aus einem Material der Gruppe der seltenen Erden gebildet sind. Die besondere Eigenheit von Elementen der seltenen Erden liegt in ihren spektroskopischen Eigenschaften. Diese Elemente weisen ein diskretes Energiespektrum auf und sind somit optisch eindeutig identifizierbar. Zusätzlich gibt es, dem Namen gemäß, keine großen Vorkommen, so dass sich durch Wahl des Elements, bzw. einer Kombination von Elementen, die Anforderungen für einen Manipulationsversuch wesentlich erhöhen lassen.

Gemäß einer Weiterbildung sind die Markierungspartikel bei Beleuchtung mit Licht im sichtbaren Spektralbereich nicht sichtbar. Diese Ausbildung hat den Vorteil, dass bei Betrachtung des Sicherheitsmerkmals beim bestimmungsgemäßen Gebrauch, der Markierungsabschnitt für den Betrachter nicht erkennbar ist. Dies ermöglicht es ferner, das Sicherheitsmerkmal an einem zu sichernden Medium verteilt anzuordnen, so dass ein unkundiger Betrachter nur den Codeabschnitt erkennt, der Markierungsabschnitt jedoch verborgen bleibt.

Gemäß einer Weiterbildung ist vorgesehen, dass bei Beleuchtung der Markierungspartikel mit Licht zumindest einer Wellenlänge aus dem Spektralbereich der optischen Strahlung, die Markierungspartikel Licht einer anderen als der Beleuchtungswellenlänge abgeben. Mit dieser Ausbildung lässt sich bspw. eine Prüfung des Sicherheitsmerkmals realisieren, bei der das Merkmal mit nicht sichtbarem Licht beleuchtet wird (bspw. IR oder UV), die Partikel mit der Abgabe von sichtbarem Licht antworten. Derartige Partikel lassen sich unter dem Begriff UC-Partikel (up-converter) zusammenfassen. Ebenfalls möglich ist, die Partikel mit sichtbarem Licht einer ersten Farbe zu beleuchten, worauf die Partikel mit sichtbarem Licht einer anderen Wellenlänge antworten. Dieser Frequenzversatz zwischen Beleuchtungs- und Antwortwellenlänge kann zusätzlich als Prüfkriterium herangezogen werden.

Gemäß dieser Weiterbildung ist auch vorgesehen, dass die Partikel Licht zumindest einer Beleuchtungswellenlänge verstärkt abgeben. Werden die Markierungspartikel mit farbigem Licht geringer Intensität beleuchtet, kommt es nach anspruchsgemäßer Weiterbildung der Markierungspartikel, zu einer deutlichen Intensitätsreaktion, so dass die Markierungspartikel als farbige Punkte bzw. Flecken deutlich in Erscheinung treten.

Mit den beiden Ausführungsformen wird eine einfache und schnelle optische Prüfung durch einen Benutzer möglich.

Eine Weiterbildung besteht darin, dass das Codeelement optisch lesbar ausgebildet ist, insbesondere als 1D- oder 2D-Codeelement. Optisch lesbare Codeelemente haben den Vorteil, dass sie kontaktlos und insbesondere im Durchlaufverfahren ausgelesen werden können, was im Hinblick auf eine automatisierte Verarbeitung des Sicherheitsmerkmals bzw. der mit diesem Merkmal versehenen Medien ermöglicht. Beispielswese kann das anspruchsgemäße Codeelement als Strichcode, Data-Matrix-Code und/oder QR-Code ausgebildet sein, wobei diese Aufzählung nicht einschränkend zu verstehen ist.

Eine Weiterbildung besteht auch darin, dass das Codeelement elektromagnetisch auslesbar ausgebildet ist. Ähnlich einem optisch lesbaren Codeelement, ist auch ein anspruchsgemäßes Codeelement kontaktlos auslesbar, was wiederum für eine automatisierte Verarbeitung von Vorteil ist. Ein elektromagnetisch auslesbares Codeelement hat jedoch zusätzlich den Vorteil, dass kein Sichtkontakt bestehen muss, so dass das Sicherheitsmerkmal auch in einem zu sichernden Medium angeordnet sein kann. Beispielswese kann das anspruchsgemäße Codeelement als RFID-Tag, NFC-Tag bzw. allgemein als Transpondersystem ausgebildet sein, wobei diese Aufzählung ebenfalls nicht einschränkend zu verstehen ist.

Nach einer Weiterbildung genügt das Kennzeichnungsmerkmal einer Bildungsvorschrift, welche die Anordnung der Markierungspartikel innerhalb des Markierungsabschnitts abbildet. Somit lässt sich erreichen, dass sich die tatsächliche Ausprägung der stochastischen Verteilung der Markierungspartikel im kontaktlos auslesbaren Code wiederspiegelt. Beispielsweise kann diese Bildungsvorschrift als Einweg-Codierung ausgebildet sein, so dass aus dem erstellten Code, kein Rückschluss auf die tatsächliche Verteilung der Markierungspartikel gezogen werden kann.

Nach einer Weiterbildung ist die Bildungsvorschrift zumindest zweistufig ausgebildet ist, womit auch das Kennzeichnungsmerkmal zweistufig ausgebildet ist. Mit dieser Ausbildung wird die Möglichkeit einer zweistufigen Prüfung geschaffen. Für den praktischen Einsatz ist es von Vorteil, wenn mit einfachen technischen Mitteln eine grundlegende schnelle Prüfung des Kennzeichnungsmerkmals möglich ist, um an einem Einsatzort bspw. eine grobe Vorabprüfung durchzuführen. Mit einer aufwändigeren Prüfvorrichtung ist dann zusätzlich eine Detailprüfung möglich, ohne dass dafür ein zusätzliches Kennzeichnungsmerkmal erforderlich wäre.

Von Vorteil ist ferner eine Weiterbildung, nach der eine Kenngröße der pseudostochastischen Bildungsregel im Codeabschnitt hinterlegt ist. Ein Angreifer könnte bspw. die Erzeugung des Kennzeichnungsmerkmals ausspähen und somit basierend auf einem generierten Markierungsabschnitt, ein gültiges Kennzeichnungsmerkmal generieren. Somit würden der Markierungsabschnitt, insbesondere die Verteilung der Markierungspartikel, und das Kennzeichnungsmerkmal zusammenpassen. Da jedoch nur eine Kenngröße der Bildungsregel hinterlegt ist, die Bildungsregel hingegen nicht, würde bei der Prüfung sofort erkennbar sein, dass die Verteilung der Markierungspartikel nicht korrekt ist.

Mit einer Weiterbildung, nach der im Codeabschnitt zumindest zwei Datenabschnitte vorhanden sind, wobei ein Datenabschnitt verschlüsselt ist, wird ebenfalls eine zweistufige Prüfung unterstützt. Ein schneller, Vor-Ort-Test kann den öffentlichen Datenabschnitt auslesen, das Auslesen des Verschlüsselten Datenabschnitts kann bspw. nur von einer Institution mit erhöhtem Sicherheitsstatus ausgelesen werden.

Im Hinblick auf eine schnelle und einfache Echtheitsprüfung ist eine Weiterbildung von Vorteil, nach der ferner ein thermosensitives Kennzeichnungselement vorhanden ist. Ein derartiges Kennzeichnungselement reagiert auf eine Temperatureinwirkung eines bestimmten Ausmaßes mit einem Farbumschlag. Bevorzugt wird dieses Element derart ausgebildet sein, dass der Farbumschlag reversibel ist, also dass sich beim Entfernen der Temperatureinwirkung der ursprüngliche Zustand wieder herstellt. Bevorzugt wird der, den Farbumschlag auslösende Temperarturbereich so gewählt, dass die Handwärme dazu ausreicht. Somit ist durch Auflegen eines Fingers auf das Merkmal und Beobachten des Farbumschlags, eine erste schnelle Prüfung ohne Zuhilfenahme eines Hilfsmittels möglich.

Die Aufgabe der Erfindung wird auch durch ein Druckmedium mit einem Sicherheitsmerkmal gelöst, wobei das Druckmedium flächig ausgebildet ist und zwei zueinander im Wesentlichen parallele Oberflächen aufweist, wobei eine der Oberflächen zur Aufnahme eines Druckbildes ausgebildet ist und wobei ferner auf einer der Oberflächen ein Sicherheitsmerkmal aufgebracht ist.

Eine Weiterbildung besteht darin, das Druckmedium als Einzelblatt ausgebildet ist. Somit wird es möglich, jedes einzelne Blatt mit einem individuellen Sicherheitsmerkmal zu versehen und somit eindeutig zu machen.

Mit einer Weiterbildung, nach der das Druckmedium als endloses Medium ausgebildet ist und das Sicherheitsmerkmal periodisch aufgebracht ist, können bspw. auch Fahrscheine, Eintrittskarten usw. mit einem individuellen und eindeutigen Sicherheitsmerkmal ausgestattet werden.

Die Erfindung betrifft ferner ein Sicherungsverfahren für ein Druckmedium mit einem Sicherheitsmerkmal, wobei mittels eines ersten Druckverfahrens ein Markierungsabschnitt auf das Druckmedium aufgebracht wird. Dann wird der Markierungsabschnitt mit einem optischen Bilderfassungsmittel erfasst und die Anordnung der Markierungspartikel innerhalb des Markierungsabschnitts bestimmt. Mittels einer Codier-Vorrichtung wird aus der ermittelten Anordnung ein Kennzeichnungsmerkmal ermittelt und dieses im Codeabschnitt hinterlegt. Anschließend wird der Codeabschnitt mittels eines zweiten Druckverfahrens auf das Druckmedium aufgebracht. Somit wird eine sichere, individuelle und eindeutige Kennzeichnung jedes einzelnen Druckmediums möglich.

Nach einer Weiterbildung ist vorgesehen, dass das erste Druckverfahren ein Tintenstrahl-Druckverfahren ist. Derartige Drucker sind aufgrund ihrer technischen Entwicklung in der Lage, eine Vielzahl unterschiedlicher Tinten bzw. Flüssigkeiten auf ein Medium aufzubringen. Insbesondere ist es mit Tintenstrahldruckern ferner möglich, den Markierungsabschnitt in beliebiger geometrischer Form aufzubringen.

Im Hinblick auf die Fälschungssicherheit ist eine Weiterbildung von Vorteil, nach der das Kennzeichnungsmerkmal mit einer Einwegcodierung im Codeabschnitt hinterlegt wird. Einwegcodes können nicht entschlüsselt werden, somit kann aus dem Kennzeichnungsmerkmal nicht auf die, dieses Merkmal erzeugende Anordnung der Markierungspartikel rückgeschlossen werden. Da es für Einwegcodes auch nicht erforderlich ist, einen Teil des Schlüssels offen zu legen, wie dies bei public-key-Systemen der Fall ist, ist eine Angriffsmöglichkeit geschlossen und wird eine deutliche Erhöhung der Sicherheit erreicht.

Eine Weiterbildung, nach der während der Erfassung des Markierungsabschnitts dieses von einem Leuchtmittel mit Licht im nicht sichtbaren Spektralbereich beleuchtet wird hat den Vorteil, dass der Markierungsabschnitt bei Betrachtung durch eine Person nicht in Erscheinung tritt und sich somit auch vor der Person verbergen lässt. Beispielsweise kann der Markierungsabschnitt unter einem anderen aufgebrachten Elemente (Text, Bild, oder Ähnlichem) angebracht und somit versteckt werden.

Mit einer Weiterbildung, nach der das Kennzeichnungsmerkmal an ein externes Datenverarbeitungssystem übertragen und dort in einem Speichermittel hinterlegt wird, lässt sich erreichen, dass eine Dreiecksprüfung jedes einzelnen Druckmediums möglich wird. Jeder Empfänger eines derart geschützten Druckmediums kann beim externen Datenverarbeitungssystem prüfen, ob das Sicherheitsmerkmal am vorliegenden Dokument bei diesem Datenverarbeitungssystem registriert bzw. hinterlegt ist. Möglicherweise könnte es einem Unbefugten gelingen, das Sicherheitsmerkmal auf einem Druckmedium zu manipulieren. Zusätzlich auch die Hinterlegung zu manipulieren kann jedoch ausgeschlossen werden.

Die Erfindung betrifft auch ein Validierungsverfahren für ein Druckmedium mit einem Sicherheitsmerkmal, wobei mittels einer Bilderfassungsvorrichtung die Anordnung der Markierungspartikel des Markierungsabschnitts und das hinterlegte Kennzeichnungsmerkmal des Codeelements erfasst werden. Mittels einer Codier-Vorrichtung wird aus der erfassten Anordnung ein zu prüfendes Kennzeichnungsmerkmal erzeugt und wobei von einer Vergleichsvorrichtung das hinterlegte mit dem zu prüfenden Kennzeichnungsmerkmal verglichen wird und bei Übereinstimmung ein Gültigkeitssignal abgegeben wird.

Eine Weiterbildung besteht auch darin, dass die Bilderfassung, die Erzeugung des zu prüfenden Kennzeichnungsmerkmals und der Vergleich, von einer Validierungsvorrichtung durchgeführt werden. Somit ist eine Integration der Sicherheitsrelevanten Prozessabschnitte gegeben, was die Angriffsfläche für eine Manipulation deutlich verkleinert.

Eine Weiterbildung besteht auch darin, dass die Erzeugung des zu prüfenden Kennzeichnungsmerkmals nach einer Stufe einer mehrstufigen Bildungsvorschrift durchgeführt wird. Dies hat den Vorteil, dass sich somit auch eine angepasste Prüfung realisieren lässt, insbesondere eine schnelle Prüfung ohne aufwändige technische Mittel, und ferner eine Detailprüfung von einer Institution mit erhöhtem Sicherheitsstatus.

Nach einer Weiterbildung erfolgt die Erzeugung des zu prüfenden Kennzeichnungsmerkmals gemäß der Bildungsvorschrift oder eines Teils der Bildungsvorschrift, welche Bildungsvorschrift bei der Erstellung des hinterlegten Kennzeichnungsmerkmals verwendet wurde.

Eine Weiterbildung, nach der das zu prüfende Kennzeichnungsmerkmal an eine externe Datenverarbeitungsvorrichtung übermittelt wird und dort von der Vergleichsvorrichtung mit einem, in einem Speichermittel hinterlegten Kennzeichnungsmerkmal verglichen wird.

Zum besseren Verständnis der Erfindung wird diese anhand der nachfolgenden Figuren näher erläutert.

Es zeigen jeweils in stark vereinfachter, schematischer Darstellung:
- Fig. 1: das gegenständliche Sicherheitsmerkmal;
- Fig. 2: die schematisierten Schritte zur Herstellung eines gegenständlichen Sicherheitsmerkmals;
- Fig. 3: ein schematisiertes Verfahren zur Prüfung der Echtheit des Sicherheitsmerkmals.

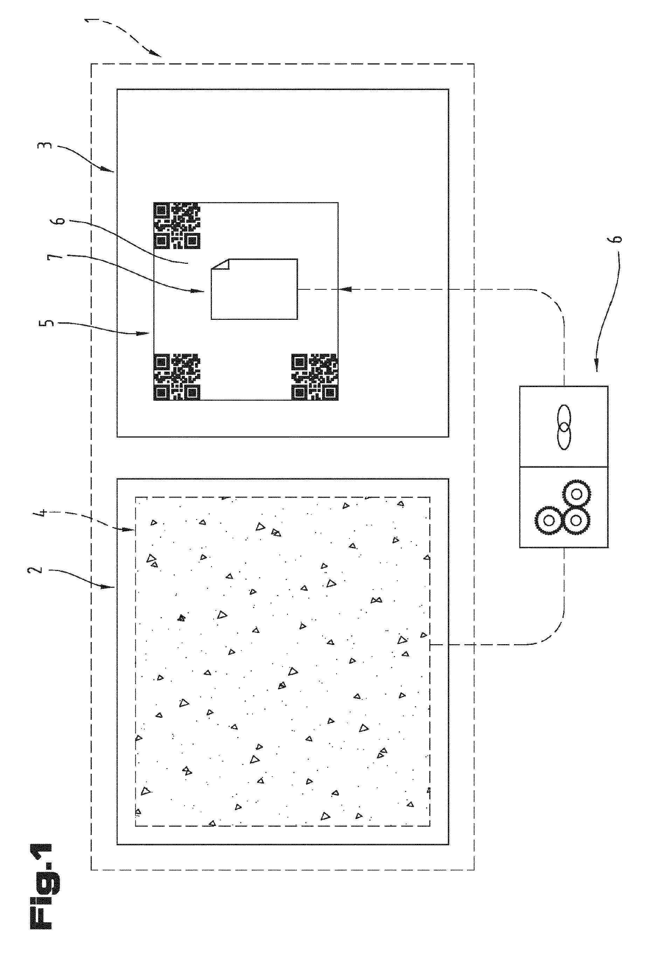

Fig. 1 zeigt ein gegenständliches Sicherheitsmerkmal 1 umfassend einen Markierungsabschnitt 2 und einen Codeabschnitt 3. Der Markierungsabschnitt 2 weist stochastisch verteilte Markierungspartikel 4 auf, der Codeabschnitt 3 weist ein kontaktlos lesbares Codeelement 5 auf. Im Codeelement 5 ist ein, gemäß einer Bildungsvorschrift 6 gebildetes Kennzeichnungsmerkmal 7 hinterlegt.

Da die Markierungspartikel 4 im Markierungsabschnitt 2 stochastisch bzw. gemäß einer weiteren Ausbildung, pseudostochastisch angeordnet sind, ist gewährleistet, dass jeder Markierungsabschnitt 2 eindeutig ist und über die Bildungsvorschrift 6, somit auch jedes Kennzeichnungsmerkmal 7 im Codeelement 5 des Codeabschnitts 3.

Das gegenständliche Sicherheitsmerkmal 1 wird auf dem zu sichernden Medium aufgebracht, wobei von Vorteil ist, dass die Markierungspartikel 4 bei Betrachtung im sichtbaren Spektralbereich nicht erkennbar sind, wodurch der gesamte Markierungsabschnitt 2 so ausgebildet werden kann, dass dieser Markierungsabschnitt 2 als solcher von einem Betrachter des zu sichernden Mediums nicht erkannt werden kann. Dies ermöglicht es beispielsweise auch, dem Markierungsabschnitt 2 unter bzw. neben weiteren am Medium angeordneten Elementen zu verbergen.

Gemäß vorteilhafter Weiterbildungen lassen sich weitere Reaktionen der Markierungspartikel 4 auf Licht einer Wellenlänge, oder eines Wellenlängenbereichs, realisieren. Die Reaktion, also die Antwort auf das einfallende Licht, kann im sichtbaren und/oder im nicht-sichtbaren Wellenlängenbereich erfolgen.

Der Codeabschnitt 3 ist kontaktlos lesbar ausgebildet, wobei eine optische Auslesbarkeit bevorzugt wird. Gemäß einer Weiterbildung ist es jedoch auch vorgesehen, dass der Codeabschnitt 3 bzw. das Codeelement 5 elektromagnetisch auslesbar ist, beispielsweise in dem das Codeelement 5 als RFID Transponder ausgebildet ist. In einer Weiterbildung kann der RFID Transponder auch mittels eines Offset-Druckverfahrens aufgedruckt werden, was den Vorteil hat, dass dieser, ähnlich den Markierungspartikeln im Markierungsabschnitt, sehr gut mit dem zu sichernden Medium verbunden ist. Ferner kann das Aufbringen des Codeelements im Durchlaufverfahren, zusammen mit dem Aufbringen des Markierungsabschnitts erfolgen. Die Markierungspartikel 4 sind aus einem Material der Gruppe der seltenen Erden gebildet, wobei diese Materialien den Vorteil haben, dass sie ein diskretes Energiespektrum aufweisen, wodurch eine eindeutige Identifikation über ihre spektralen Eigenschaften ermöglicht wird. Beispielsweise hat das Material Energiespektren im infraroten bzw. nahen Infraroten, sodass bei Beleuchtung des Markierungsabschnitts 2 mit IR- bzw. NIR-Licht und Aufnahme des Markierungsabschnitts mit einer entsprechend ausgebildeten Kamera, die Partikel in Erscheinung treten.

Der Codeabschnitt 3, insbesondere das Codeelement 5, kann nun mehrere Funktionen übernehmen, wobei die kontaktlos auslesbare Bereitstellung eines Kennzeichnungsmerkmals 7, welches direkten Bezug zum Markierungsabschnitt 2 hat, die Wichtigste ist. Der Codeabschnitt 3 ist nun bevorzugt derart ausgebildet, dass neben dem Codeelement 5, weitere Codeelemente bzw. Kennzeichnungs- und/oder Schriftelemente angeordnet werden können. Auch das Codeelement 5 ist bevorzugt derart ausgebildet, dass neben dem Kennzeichnungsmerkmal 7 weitere Merkmale hinterlegt werden können. Somit kann das gegenständliche Sicherheitsmerkmal 1 mit bekannten Verfahren zur Dokumentinhaltssicherung kombiniert werden.

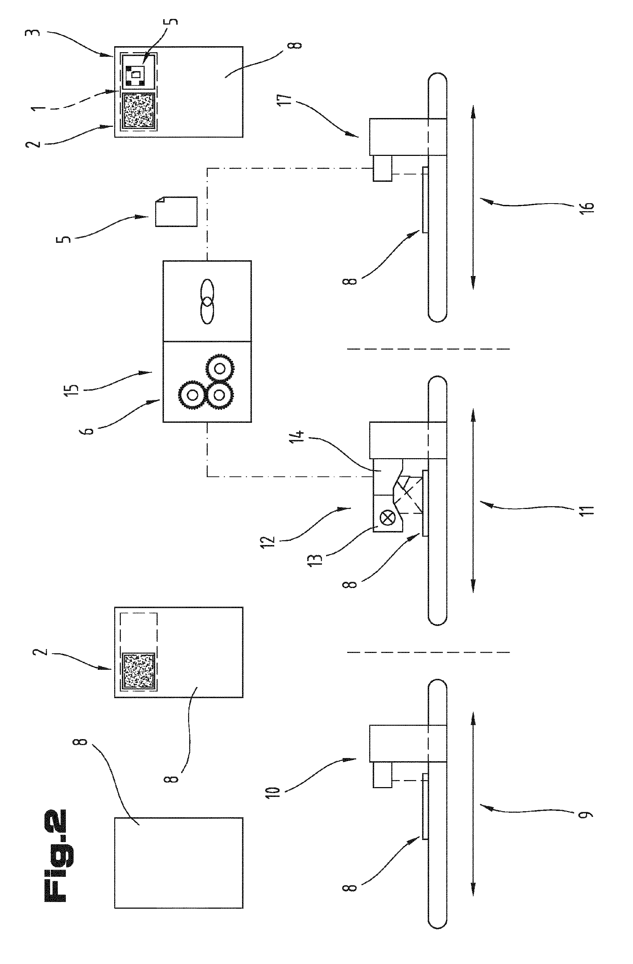

Fig. 2 zeigt ein Verfahren und eine Vorrichtung zur Bildung eines gegenständlichen Sicherheitsmerkmales 1 auf einem Druckmedium 8. Das Druckmedium 8 ist im dargestellten Fall ein einzelnes Blatt, gemäß vorteilhafter Weiterbildungen kann das Druckmedium 8 auch als Endlosmedium ausgeführt sein, was insbesondere bei Fahrscheinen, Eintrittskarten oder dergleichen der Fall sein wird. Das Druckmedium 8 kann beispielsweise auch scheckkartenartig sein und so beispielsweise als Zutritts- und/oder Identitätskarte dienen. Das Druckmedium kann insbesondere das zu sichernde Medium selbst sein bzw. als Medium dienen, um das Sicherheitsmerkmal an einem zu sichernden Medium anzubringen.

Die Herstellung eines Sicherheitsmerkmals 1 auf einem Druckmedium 8 lässt sich im Wesentlichen in drei Schritte gliedern, wobei die einzelnen Schritte getrennt voneinander, oder integriert bzw. teilintegriert durchgeführt werden können. In einem ersten Schritt 9 wird der Markierungsabschnitt 2 auf ein ungekennzeichnetes Druckmedium 8 aufgebracht. Dies erfolgt bevorzugt in Durchlaufverfahren mit einer Tintenstrahl-Druckvorrichtung 10, da die Markierungspartikel in einer Lösung vorliegen und somit in vorteilhafter Weise von einer derartigen Tintenstrahl-Druckvorrichtung 10 verarbeitet werden können. Aufgrund der nicht deterministischen Verteilung der Markierungspartikel in der Lösung, der zu druckenden Tinte, ist beim Druckvorgang nicht vorhersagbar, in welcher Verteilung die Markierungspartikel am Markierungsabschnitt 2 aufgebracht werden. Somit ergibt sich für jeden Markierungsabschnitt 2 eine nicht vorhersagbare, stochastische Verteilung der Markierungspartikel. Die Aufbringung des Markierungsabschnittes 2 mit einer Tintenstrahl-Druckvorrichtung 10 hat ferner den weiteren Vorteil, dass durch die individuelle Ansteuerung der Druckdüsen eine spezifische Verteilung der Markierungspartikel im Markierungsabschnitt 2 erzeugt werden kann. Erfolgt nun die Ansteuerung der Druckdüsen durch einen Pseudozufallsgenerator, wird eine Verteilung bzw. eine Anordnung der Markierungspartikel erzeugt, die bei einer Analyse der Verteilung einer Zufallsverteilung genügt, für den Hersteller bzw. Anwender des gegenständlichen Sicherheitsmerkmals jedoch deterministisch ist. Die Verwendung einer Tintenstrahl-Druckvorrichtung 10 hat den weiteren Vorteil, dass die Positionierung des Sicherheitsmerkmals am Druckmedium 8 bis hin zu einer Losgröße 1 individuell wählbar ist, ohne dass dafür Umrüstvorgänge der Druckvorrichtung erforderlich wären.

Am Ende des ersten Schrittes 9 ist nun am Druckmedium 8 der Markierungsabschnitt 2, mit den stochastisch bzw. pseudostochastisch verteilten Markierungspartikeln aufgebracht.

Im zweiten Schritt 11 wird der zuvor aufgebrachte Markierungsabschnitt 2 erfasst, insbesondere die Verteilung der Markierungspartikel. Dazu wird das Druckmedium 8 unter einer Erfassungsvorrichtung 12 angeordnet, wobei wiederum ein Durchlaufverfahren bevorzugt ist. Das Druckmedium 8, insbesondere der Markierungsabschnitt, wird von einer Lichtquelle 13 beleuchtet und der beleuchtete Abschnitt von einer Bilderfassungsvorrichtung 14 aufgenommen. Entsprechend dem gewählten Material der Markierungspartikel wird von der Lichtquelle 13 bevorzugt Licht im Spektralbereich des infraroten bzw. nahen Infrarots abgegeben. Durch Wahl anderer Materialien bzw. durch eine Materialkombination ist es nun möglich, eine Mehrphasen-Spektralanalyse durchzuführen, in dem die Lichtquelle, beispielsweise zeitlich versetzt, Licht unterschiedlicher Wellenlänge abgibt und somit jeweils unterschiedliche Verteilungsmuster der Markierungspartikel von der Bilderfassungsvorrichtung 14 erfasst werden. Das erfasste Abbild wird an eine Codier-Vorrichtung 15 übermittelt, von dieser aufbereitet und als Kennzeichnungsmerkmal in einem Codeelement 5 hinterlegt. Die Codier-Vorrichtung 15 generiert das Kennzeichnungsmerkmal gemäß einer Bildungsvorschrift 6, wobei dieser Bildungsvorschrift 6 gemäß einer Weiterbildung zumindest zweistufig ausgebildet sein kann, wodurch auch das Kennzeichnungsmerkmal im Codeelement 5 zumindest zweistufig ausgebildet ist. Dies hat den Vorteil, dass das Codeelement 5 mit Auslesegeräten unterschiedlichster Sicherheitsstufe ausgelesen werden kann. Beispielsweise ist mit einem einfachen, aber dafür weit verbreiteten Lesegerät, eine erste Stufe des Codeelements 5 auslesbar und ermöglicht dadurch eine grundlegende Aussage über die Gültigkeit des Codeelements 5. Sind hohe bzw. höchste Anforderungen an die Sicherheitsprüfung gestellt, kann die entsprechende Stufe des Codeelements 5 ausgelesen werden. Derartige Prüfungen sind jedoch zumeist nur mit einer aufwändigeren Auslesevorrichtung möglich, welche zumeist nicht allgemein verfügbar sind, sondern zumeist nur bei autorisierten Prüfstellen vorhanden sein wird.

In einem dritten Schritt 16 wird das erzeugte Codeelement 5 auf das Druckmedium 8 aufgebracht und somit das gegenständliche Sicherheitsmerkmal 1 gebildet. Zum Aufbringen des Codeelements 5 wird bevorzugt ebenfalls eine Tintenstrahl-Druckvorrichtung 10 verwendet und das Codeelement 5 im Durchlaufverfahren aufgebracht.

In der dargestellten Anordnung sind aus Beschreibungsgründen die drei Schritte getrennt ausgeführt. Bevorzugt werden jedoch der zweite 11 und dritte 12 Schritt auf einer integrierten Erfassungs- und Druckvorrichtung ausgeführt, sodass ein Manipulationsschritt des Druckmediums bzw. zwei getrennte Verfahrensschritte vermieden werden können. In einer Weiterbildung ist es jedoch auch möglich, dass alle drei Schritte integriert ausgeführt werden. In diesem Fall ist zu gewährleisten, dass das Lösungsmittel, in welchem die Markierungspartikel vorhanden und zusammen mit diesen auf das Druckmedium 8 aufgebracht wurden, vollständig getrocknet bzw. gehärtet ist, um eine Veränderung der Anordnung der Markierungspartikel im Markierungsabschnitt 2 zum Zeitpunkt der Erfassung durch die Bilderfassungsvorrichtung 14 zu verhindern.

Die Prüfung eines Druckmediums mit dem gegenständlichen Sicherheitsmerkmal kann beispielsweise mit einer Erfassungsvorrichtung 12 erfolgen, wie sie im zweiten Schritt 11 zur Bildung des Codeelements 5 vorhanden ist. In diesem Fall wird die Bilderfassungsvorrichtung 14 jedoch den Markierungsabschnitt 2 und den Codeabschnitt 3 erfassten und sowohl die Anordnung der Markierungspartikel 4 im Markierungsabschnitt 2, als auch das Codeelement 5 im Codeabschnitt 3 auslesen. Die erfasse Anordnung der Markierungspartikel kann nun erneut von der Codier-Vorrichtung 15 gemäß der Bildungsvorschrift 6 in ein zu prüfendes Codeelement umgesetzt werden, welches zu prüfende Codeelement mit dem ausgelesenen Codeelement 5 verglichen wird.

Im Fall einer mehrstufigen Bildungsvorschrift lassen sich mehrere Sicherheitsprüfungsstufen realisieren. Beispielsweise kann das Sicherheitsmerkmal, insbesondere der Codeabschnitt, mit einem weit verbreiteten Prüfgerät ausgelesen und der in der ersten Sicherheitsstufe hinterlegte Inhalt dargestellt werden. Dies kann beispielsweise mit einem Smartphone erfolgen, welches eine integrierte Kamera und eine Applikation aufweist, welche eine optische Codierung auslesen und decodieren kann. Aufgrund der weiten Verbreitung derartiger Mobilgeräte ist sehr schnell und ohne großen Installations- bzw. Vorbereitungsaufwand eine einfache und grundlegende Prüfung des gegenständlichen Sicherheitsmerkmals möglich.

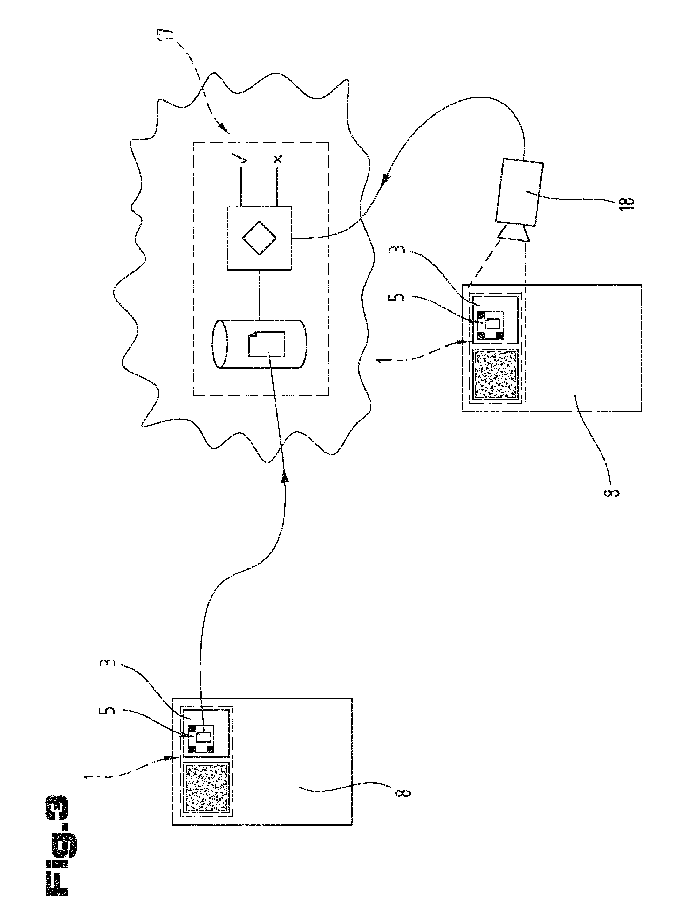

Fig. 3 zeigt eine weitere mögliche Ausführungsform mit einer Dreiecksprüfung, um für einen Empfänger eines mit dem gegenständlichen Sicherheitsmerkmals 1 gesicherten Druckmediums, eine unabhängige Prüfung zu ermöglichen. Dazu wird bei der Herstellung des Druckmediums 8 das im Codeabschnitt 3 hinterlegte Codeelement 5 an einen zentralen Prüfdienst 17 übertragen und dort in einer Datenbank hinterlegt. Gelangt das Druckmedium 8 nun zu einem Empfänger, kann dieser das Sicherheitsmerkmal 1 auslesen und auf grundsätzliche inhärente Gültigkeit prüfen. Eine deutliche Steigerung der Sicherheit erhält man jedoch, wenn von der Erfassungsvorrichtung 18 des Empfängers auch das Codeelement 5 an den zentralen Prüfdienst 17 übermittelt wird. Dort wird das zu prüfende Codeelement mit dem in der Datenbank hinterlegte Prüfelement verglichen und dem Erfasser bzw. der Erfassungsvorrichtung 18 eine entsprechende Rückmeldung gegeben. Somit erhält der Empfänger des Druckmediums 8 die Gewährleistung, dass das Druckmedium 8 auf dem Weg von der Herstellung bis zum Empfänger nicht manipuliert wurde.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 3 ist eine weitere und gegebenenfalls für sich eigenständige Ausführungsform des Sicherheitsmerkmals gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Die Ausführungsbeispiele zeigen mögliche Ausführungsvarianten des Sicherheitsmerkmals sowie darauf basierender Verfahren und Medien, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1-3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Sicherheitsmerkmals sowie darauf basierender Verfahren und Medien, diese bzw. deren Bestandteile teilweise unmaßstäblich und/oder vergrößert und/oder verkleinert dargestellt wurden.

### Bezugszeichenaufstellung

- 1: Sicherheitsmerkmal
- 2: Markierungsabschnitt
- 3: Codeabschnitt
- 4: Markierungspartikel
- 5: Codeelement
- 6: Bildungsvorschrift
- 7: Kennzeichnungsmerkmal
- 8: Druckmedium
- 9: erster Schritt
- 10: Tintenstrahl-Druckvorrichtung
- 11: zweiter Schritt
- 12: Erfassungsvorrichtung
- 13: Lichtquelle
- 14: Bilderfassungsvorrichtung
- 15: Codier-Vorrichtung
- 16: dritter Schritt
- 17: Prüfdienst
- 18: Erfassungsvorrichtung

## Patentansprüche

1. Sicherheitsmerkmal (1) umfassend
einen Markierungsabschnitt (2) und einen Codeabschnitt (3),
**dadurch gekennzeichnet, dass**
der Markierungsabschnitt (2) stochastisch verteilte Markierungspartikel (4) aufweist, und dass
der Codeabschnitt (3) ein kontaktlos lesbares Codeelement (5) mit einem deterministischen Code aufweist,
wobei ferner ein aus dem Markierungsabschnitt (2) gebildetes Kennzeichnungsmerkmal (7) im Codeelement (5) hinterlegt ist.

2. Sicherheitsmerkmal nach Anspruch 1, **dadurch gekennzeichnet, dass** die stochastische Verteilung einer pseudostochastisch Bildungsregel genügt.

3. Sicherheitsmerkmal nach einem der Ansprüche 1 oder 2, **dadurch gekennzeichnet, dass** die Markierungspartikel (4) aus einem Material der Gruppe der seltenen Erden gebildet sind.

4. Sicherheitsmerkmal nach einem der Ansprüche 1 bis 3, **dadurch gekennzeichnet, dass** die Markierungspartikel (4) bei Beleuchtung mit Licht im sichtbaren Spektralbereich nicht sichtbar sind.

5. Sicherheitsmerkmal nach einem der Ansprüche 1 bis 4, **dadurch gekennzeichnet, dass** bei Beleuchtung der Markierungspartikel (4) mit Licht zumindest einer Wellenlänge aus dem Spektralbereich der optischen Strahlung, die Markierungspartikel (4) Licht einer anderen als der Beleuchtungswellenlänge abgeben, oder Licht zumindest einer Beleuchtungswellenlänge verstärkt abgeben.

6. Sicherheitsmerkmal nach einem der Ansprüche 1 bis 5, **dadurch gekennzeichnet, dass** das Codeelement (5) optisch lesbar ausgebildet ist, insbesondere als 1D- oder 2D-Codeelement.

7. Sicherheitsmerkmal nach einem der Ansprüche 1 bis 5, **dadurch gekennzeichnet, dass** der Codeabschnitt (3) elektromagnetisch auslesbar (5)ausgebildet ist.

8. Sicherheitsmerkmal nach einem der Ansprüche 1 bis 7, **dadurch gekennzeichnet, dass** das Kennzeichnungsmerkmal (7) einer Bildungsvorschrift (6) genügt, welche die Anordnung der Markierungspartikel (4) innerhalb des Markierungsabschnitts (2) abbildet.

9. Sicherheitsmerkmal nach Anspruch 8, **dadurch gekennzeichnet, dass** die Bildungsvorschrift (6) zumindest zweistufig ausgebildet ist, und somit auch das Kennzeichnungsmerkmal (7) zweistufig ausgebildet ist.

10. Sicherheitsmerkmal nach einem der Ansprüche 3 bis 9, **dadurch gekennzeichnet, dass** eine Kenngröße der pseudostochastischen Bildungsregel im Codeabschnitt (3) hinterlegt ist.

11. Sicherheitsmerkmal nach einem der Ansprüche 1 bis 10, **dadurch gekennzeichnet, dass** im Codeabschnitt (3) zumindest zwei Datenabschnitte vorhanden sind, wobei ein Datenabschnitt verschlüsselt ist.

12. Sicherheitsmerkmal nach einem der Ansprüche 1 bis 11, **dadurch gekennzeichnet, dass** ferner ein thermosensitives Kennzeichnungselement vorhanden ist.

13. Druckmedium (8) mit einem Sicherheitsmerkmal, wobei das Druckmedium (8) flächig ausgebildet ist und zwei zueinander im Wesentlichen parallele Oberflächen aufweist, wobei eine der Oberflächen zur Aufnahme eines Druckbildes ausgebildet ist, **dadurch gekennzeichnet, dass** auf einer der Oberflächen ein Sicherheitsmerkmal (1) nach einem der Ansprüche 1 bis 12 aufgebracht ist.

14. Druckmedium nach Anspruch 13, **dadurch gekennzeichnet, dass** das Druckmedium (8) als Einzelblatt ausgebildet ist.

15. Druckmedium nach Anspruch 13 oder 14, wobei das Druckmedium (8) als endloses Medium ausgebildet ist, **dadurch gekennzeichnet, dass** das Sicherheitsmerkmal (1) periodisch aufgebracht ist.

16. Sicherungsverfahren für ein Druckmedium mit einem Sicherheitsmerkmal (1), insbesondere nach einem der Ansprüche 1 bis 12, **dadurch gekennzeichnet, dass** mittels eines ersten Druckverfahrens ein Markierungsabschnitt (2) auf das Druckmedium (8) aufgebracht wird;
dass der Markierungsabschnitt (2) mit einem optischen Bilderfassungsmittel erfasst und die Anordnung der Markierungspartikel (4) innerhalb des Markierungsabschnitts (2) bestimmt wird;
dass mittels einer Codier-Vorrichtung (15) aus der ermittelten Anordnung ein Kennzeichnungsmerkmal (7) ermittelt wird;
und dass das Kennzeichnungsmerkmal (7) im Codeabschnitt (3) hinterlegt und der Codeabschnitt (3) mittels eines zweiten Druckverfahrens auf das Druckmedium (8) aufgebracht wird.

17. Sicherungsverfahren nach Anspruch 16, **dadurch gekennzeichnet, dass** das erste Druckverfahren ein Tintenstrahl-Druckverfahren ist.

18. Sicherungsverfahren nach Anspruch 16 oder 17, **dadurch gekennzeichnet, dass** das Kennzeichnungsmerkmal (7) mit einer Einwegcodierung im Codeabschnitt (3) hinterlegt wird.

19. Sicherungsverfahren nach einem der Ansprüche 16 bis 18, **dadurch gekennzeichnet, dass** während der Erfassung des Markierungsabschnitts (2) dieses von einem Leuchtmittel mit Licht im nicht sichtbaren Spektralbereich beleuchtet wird.

20. Sicherungsverfahren nach einem der Ansprüche 16 bis 19, **dadurch gekennzeichnet, dass** das Kennzeichnungsmerkmal (7) an ein externes Datenverarbeitungssystem übertragen und dort in einem Speichermittel hinterlegt wird.

21. Validierungsverfahren für ein Druckmedium (8) mit einem Sicherheitsmerkmal (1), insbesondere nach einem der Ansprüche 1 bis 12, **dadurch gekennzeichnet, dass** mittels einer Bilderfassungsvorrichtung die Anordnung der Markierungspartikel (4) des Markierungsabschnitts (2) und das hinterlegte Kennzeichnungsmerkmal (7) des Codeelements (5) erfasst werden;
dass mittels einer Codier-Vorrichtung (15) aus der erfassten Anordnung ein zu prüfendes Kennzeichnungsmerkmal (7) erzeugt wird;
und dass von einer Vergleichsvorrichtung das hinterlegte mit dem zu prüfenden Kennzeichnungsmerkmal (7) verglichen wird und bei Übereinstimmung ein Gültigkeitssignal abgegeben wird.

22. Validierungsverfahren nach Anspruch 21, **dadurch gekennzeichnet, dass** die Bilderfassung, die Erzeugung des zu prüfenden Kennzeichnungsmerkmals (7) und der Vergleich, von einer Validierungsvorrichtung durchgeführt werden.

23. Validierungsverfahren nach Anspruch 21 oder 22, **dadurch gekennzeichnet, dass** die Erzeugung des zu prüfenden Kennzeichnungsmerkmals (7) nach einer Stufe einer mehrstufigen Bildungsvorschrift (6) durchgeführt wird.

24. Validierungsverfahren nach einem der Ansprüche 21 bis 23, **dadurch gekennzeichnet, dass** die Erzeugung des zu prüfenden Kennzeichnungsmerkmals (7) gemäß der Bildungsvorschrift (6) oder eines Teils der Bildungsvorschrift (6) erfolgt, welche Bildungsvorschrift (6) bei der Erstellung des hinterlegten Kennzeichnungsmerkmals (7) verwendet wurde.

25. Validierungsverfahren nach einem der Ansprüche 22 bis 24, **dadurch gekennzeichnet, dass** das zu prüfende Kennzeichnungsmerkmal (7) an eine externe Datenverarbeitungsvorrichtung übermittelt wird und dort von der Vergleichsvorrichtung mit einem, in einem Speichermittel hinterlegten Kennzeichnungsmerkmal (7) verglichen wird.
